# EUROPÄISCHE PATENTANMELDUNG

(11) **EP 1 002 458 A1**
(43) Veröffentlichungstag der Anmeldung: **24.05.2000**
(21) Anmeldenummer: 98122044.5
(22) Anmeldetag: 20.11.1998
(51) Int. Cl.: A01D 34/76

(54) **Antrieb für Kreiselmäher**

(71) Anmelder: NIEMEYER Landmaschinen GmbH, D-48477 Hörstel-Riesenbeck (DE)
(72) Erfinder: Niemeyer, Reinhard Dr., 48477 Hörstel (DE)

(57) **Zusammenfassung**

Kreiselmäher, insbesondere Scheibenmäher, zum Anbau an Heck- oder Frontdreipunktgestänge von Traktoren, mit mehreren um vertikale Achsen drehbaren und von der Zapfwelle eines Traktors antreibbaren Mähscheiben (12), die zusammenwirkend ein Mähaggregat (4) bilden, wobei die Mähscheiben (12,12') in einem Getriebegehäuse (14) unterhalb der Mähscheiben (12,12') gelagert sind, und das Stirnradgetriebe (9) als Fortsetzung des Antriebsstrangs (8) ausgehend von einer Zapfwelle eine Antriebskette (13) umfaßt, und die Antriebskette (13) Stirnräder (16,16') aufweist, die mit Stirnradritzeln (15) von Mähscheiben (12,12') in Eingriff stehen, wobei zwei benachbarten Mähscheiben (12,12');(12,12);(12',12') jeweils innerhalb der Antriebskette zur Überbrückung der Achsabstände zwei Stirnräder (16,16') zugeordnet werden können, und daß bei jedem Paar benachbarter Mähscheiben die Summe der Teilkreisdurchmesser beider Stirnräder (16,16');(16,16);(16',16') größer ist, als der Achsabstand (28) zwischen diesen beiden Mähscheiben.

## Beschreibung

Die Erfindung betrifft einen Antrieb für Kreiselmäher, insbesondere für Scheibenmäher, nach dem Oberbegriff des Anspruchs 1.

Kreiselmäher, insbesondere Scheibenmäher, nach dem gattungsbildenden Oberbegriff gemäß Anspruch 1 sind beispielsweise in dem NIEMEYER-Prospekt 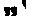 Scheibenmäher SM, Serien-Nr. 09/98 SM 801" dargestellt und beschrieben.

Die Drehrichtungen benachbarter, als Mähscheiben ausgebildeter Mähkreisel eines Scheibenmähers können gleichläufig oder gegenläufig sein. Bestimmt sind die Zuordnungen der Drehrichtungen der benachbarten Mähscheiben von der beabsichtigten Form der Mahdablage.

Insbesondere bei Scheibenmähern mit größeren Schnittbreiten, beispielsweise größer als 2,20 m, können die Drehrichtungen benachbarter Mähscheiben an den längsseitigen Enden eines Mähaggregates gleichläufig ausgelegt sein, so daß insbesondere die beiden jeweils äußeren Mähscheiben gleichläufig drehen. Dadurch wird die Mahd von der jeweils weiter außen liegenden Mähscheibe zur jeweils benachbarten inneren Mähscheibe während des Mähens quer zur Fahrtrichtung nach innen transportiert. Dieses verringert die Breite der Mahdablage.

Aus der DE 31 27 078 C2 ist eine Scheibenmähmaschine bekannt, bei der die Zuordnung der Drehrichtungen der Mähscheiben zu jedem Zeitpunkt beliebig veränderbar ist und eine Bildung von Gruppen zusammenwirkender Messerträger ermöglicht ist. Dieses wird dadurch erreicht, daß das Lagergehäuse einer Mähscheibe mit dem zugehörigen Antriebsritzel samt der zugehörigen Antriebswelle umgesetzt werden kann, so daß das Antriebsritzel wahlweise in den Eingrffsbereich eines der benachbarten Zahnräder eingreifen kann. Nachteilig bei dieser Ausführungsart ist, daß die Achsabstände der Mähscheiben erheblich unterschiedlich groß sein können, wodurch sich je nach Art der Zuordnung der Drehrichtung der Mähscheiben unterschiedlich große Überdeckungen der Flugkreise der Messerspitzen ergeben können. Diese Nachteile werden durch die nachfolgend dargelegte Erfindung vermieden.

Der rotatorische Antrieb der Mähscheiben geht aus von der Zapfwelle eines Traktors. Das Antriebsdrehmoment der Zapfwelle wird mittels eines Antriebsstrangs, ausgehend von der Gelenkwelle zwischen Traktor und Scheibenmäher über weitere nachfolgende zusammenwirkende Transmissionselemente, wie beispielsweise Winkelgetriebe, Gelenkwelle oder Keilriementrieb, mittels eines Zahnradgetriebes, welches beispielsweise aus überwiegend in Reihe angeordneten Stirnrädern besteht, an die Mähscheiben herangeführt. Alle Mähscheiben stehen mittels dieses Zahnradgetriebes in bekannter Weise untereinander antriebsmäßig in Wirkverbindung, so daß bedingt durch die miteinander in Eingriff stehenden Zahnräder die Drehrichtung jeder Mähscheibe des Mähaggregats vorgegeben ist.

Das Zahnradgetriebe befindet sich unterhalb der Mähscheiben in einem flachbauenden Antriebsgehäuse. Das Zahnradgetriebe besteht beispielsweise aus in Reihe angeordneten Stirnrädern, die eine Antriebskette bilden, wobei jedes Stirnrad mit einem benachbarten Stirnrad in Eingriff steht.

Der Antrieb einer Mähscheibe kann so erfolgen, daß das untere Ende der Antriebswelle einer Mähscheibe, ausgebildet als Stirnradritzel, mit einem Stirnrad oder mit zwei Stirnrädern in Eingriff steht.

Ein Stirnradritzel kann auch außerhalb der Antriebskette mit dieser antriebsseitig in Wirkverbindung stehen oder innerhalb der Antriebskette Bestandteil der Antriebskette sein.

Für die Mahdablage des gemähten Grünfutters sind die Drehrichtungen der zusammenwirkenden Mähscheiben, insbesondere bei größeren Schnittbreiten, nicht nur für die Breite einer abgelegten Mahd von Bedeutung, sondern auch für die Verteilung des Schnittgutes der Mahd innerhalb der gemähten Fläche. Die Art der Verteilung kann den Anwelk- und Trocknungsvorgang günstiger oder auch ungünstiger beeinflussen. Dieses ist insbesondere auch von Bedeutung in Verbindung mit Aufbereitern als Bestandteil eines Scheibenmähers.

Eine eingeengte Mahdablage zur Bildung von Fahrgassen für Traktorräder ist insbesondere an Scheibenmähern für den Frontanbau dann gefordert, wenn daß Grünfutter direkt von einem an den Traktor angehängten Ladewagen aufgenommen werden soll.

Eine breite Mahdablage ist dann gefordert, wenn eine möglichst breitflächige Verteilung der Mahd zur Vergrößerung der Sonneneinstrahlfläche vorrangig ist und auf die Bildung von Fahrgassen verzichtet werden kann.

Ist die Breitablage der Mahd vorrangig, so drehen alle Mähscheiben vorzugsweise paarweise gegenläufig zueinander.

Ist eine eingeengte Mahdablage gefordert, so drehen die jeweils äußeren Mähscheiben gleichsinnig zueinander, um das Mähgut gleichzeitig quer zur Fahrtrichtung zu fördern.

Bei zwei benachbarten gegenläufig drehenden Mähscheiben befinden sich bei bekannten Ausführungsarten von Scheibenmähern die Zahnradritzel beispielsweise innerhalb der Antriebskette, wobei jeweils zwei benachbarte Stirnräder eine Drehrichtungsumkehr der benachbarten Mähscheiben herbeiführen.

Ist die gleiche Drehrichtung der benachbarten Mähscheiben gefordert, so werden beispielsweise drei Stirnräder innerhalb des Bereichs des Achsabstandes der benachbarten Mähscheiben angeordnet, so daß sich die beabsichtigte Drehrichtung der benachbarten Mähscheibe einstellt.

Je nach vorgegebener Zuordnung der Drehrichtungen benachbarter Mähscheiben können somit zwischen den Mähscheiben zwei oder drei Stirnräder miteinander in Eingriff stehen. Bei gleichem Achsabstand der Mähscheiben hat diese Ausbildung der Stirnräderzuordnung Stirnräderpaarungen mit unterschiedlich großen Teilkreisdurchmessern zur Folge, wobei je nach Stirnräderpaarung die Anzahl der Lagerstellen der Stirnräder ebenfalls unterschiedlich ist.

Den erfinderischen Überlegungen liegt die Aufgabe zugrunde, mit einer möglichst geringen und gleichen Anzahl von Antriebselementen, ausgebildet als Stirnräder, unabhängig von der Drehrichtungszuordnung bei gleichbleibenden Achsabständen der Mähscheiben, eine Antriebskette zum Antrieb der Mähscheiben von Scheibenmähern zu schaffen.

**Aufgabe der Erfindung** ist es, ein Antriebsgetriebe zum Antrieb der Mähscheiben eines Scheibenmähers zu schaffen, welches sich unterhalb der Mähscheiben befindet, und welches eine Antriebskette umfassend, welche aus in Reihe angeordneten Stirnrädern mit innerhalb oder außerhalb der Antriebskette befindlichen Stirnradritzeln, oder auch aus einer Kombination beider Ausführungsarten innerhalb oder außerhalb der Antriebskette befindlicher Stirnradritzel besteht, wobei die Antriebskette unabhängig von der Zuordnung der Drehrichtungen der Mähscheiben untereinander bei untereinander gleichen Achsabständen der Mähscheiben mit untereinander gleichen Stirnrädern und mit gleicher Anzahl von Stirnrädern, realisiert werden kann.

Gelöst wird die Aufgabe mit den im kennzeichnenden Teil des Anspruchs 1 genannten Merkmalen. Hinsichtlich weiterer wesentlicher Ausgestaltungen der Erfindung wird auf die Ansprüche 2 bis 8 verwiesen.

Weitere Merkmale und Vorteile der Erfindung ergeben sich aus der nachfolgenden Beschreibung und den Zeichnungen, in denen Ausführungsbeispiele eines Antriebs nach der Erfindung schematisch, angenähert maßstäblich dargestellt ist. Weitere Merkmale und Vorteile der Erfindung ergeben sich aus der nachfolgenden Beschreibung und den Zeichnungen.

Es zeigen:
- Fig.1: Ein Scheibenmähwerk in Heckausführung in Draufsicht in Fahrtrichtung (F)
- Fig.2: Scheibenmähwerk in Fahrtrichtung (F) gemäß Ansicht (X) in Fig.1.
- Fig.3: Schnitt A-A gemäß Fig.2
- Fig.4: Schnitt C-C gemäß Fig.2
- Fig.5: Schnitt B-B gemäß Fig.2
- Fig.6: Ein Mähaggregat (4) mit der Schnittbreite (S) mit sieben Mähscheiben in der Draufsicht
- Fig.7: Ein Mähaggregat (4) anlog Fig.6
- Fig.8: Ein Ausführungsbeispiel einer offengelegten Antriebskette (13) eines Antriebsgetriebes eines Mähaggregats (4) gemäß Fig.6
- Fig.8a: Ein alternatives Ausführungsbeispiel einer offengelegten Antriebskette (13) gemäß Fig.8
- Fig.9: Ein Ausführungsbeispiel einer offengelegten Antriebskette (13) eines Antriebsgetriebes eines Mähaggregats (4) gemäß Fig.7
- Fig. 10: Ein Mähaggregat (4) mit der Schnittbreite (S) mit acht Mähscheiben in der Draufsicht
- Fig.11: Ein Mähaggregat (4) anlog Fig.10
- Fig. 12: Ein Ausführungsbeispiel einer offengelegten Antriebskette (13) eines Antriebsgetriebes eines Mähaggregats (4) gemäß Fig. 10
- Fig. 13: Ein Ausführungsbeispiel einer offengelegten Antriebskette (13) eines Antriebsgetriebes eines Mähaggregats (4) gemäß Fig.11

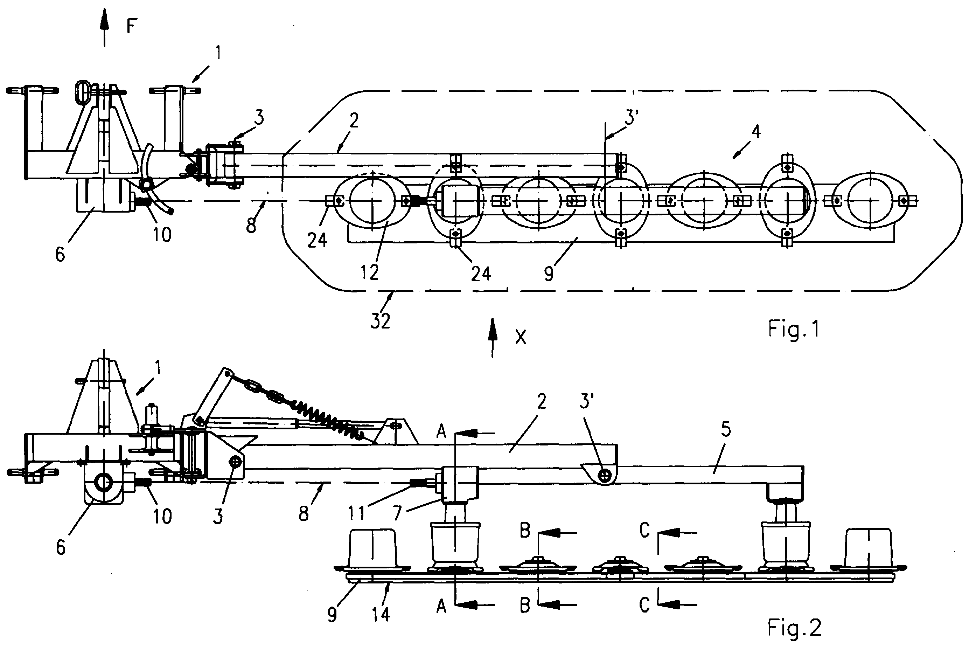

In **Fig. 1** ist als Ausführungsbeispiel ein Scheibenmähwerk in Heckausführung mit dem Tragwerk (1) zur Ankopplung an das Dreipunktgestänge eines Traktors in Draufsicht in Fahrtrichtung (F) dargestellt. Die Mähscheiben (12) sind in einem Antriebsgehäuse (14) gelagert. Der Antrieb des Mähaggregats (4) und damit der Antrieb der Mähscheiben (12) erfolgt von der Zapfwelle eines Traktors, dessen Antriebsdrehmoment mittels einer Gelenkwelle von der Zapfwelle des Traktors auf die Eingangswelle eines Winkelgetriebes (6) übertragen wird. Die Fortsetzung des Antriebsstrangs (8) kann beispielsweise aus einer Gelenkwelle bestehen, welche die Ausgangswelle (10) des Winkelgetriebes (6) mit der Eingangswelle (11) des Winkelgetriebes (7) verbindet. Das Winkelgetriebe (7) als Teil des Antriebsstrangs (8) erzeugt eine Verbindung zu dem Stirnradgetriebe (9) unterhalb der Mähscheiben (12).

Das Mähaggregat (4) besteht in dem dargestellten Ausführungsbeispiel aus dem Stirnradgetriebe (9) mit seinem Antriebsgehäuse (14), welches sieben Mähscheiben (12) umfaßt. Das Mähaggregat (4) ist mittels eines Auslegers (2) horizontal schwenkbeweglich zur Anpassung an das Bodenrelief um die in Fahrtrichtung ausgerichteten Horizontalachsen (3,3') gelagert, wobei der Ausleger (2) traktorseitig um die Horizontalachse (3) an dem Tragwerk (1), und geräteseitig um die Horizontalachse (3') an dem Querträger (5) des Mähaggregats (4) angeschlagen ist. Desweiteren ist die Kontur der Schutzabdeckung (32) des Mähaggregates dargestellt.

**Fig. 2** zeigt das Scheibenmähwerk in Fahrtrichtung (F) gemäß Ansicht (X) in Fig.1.

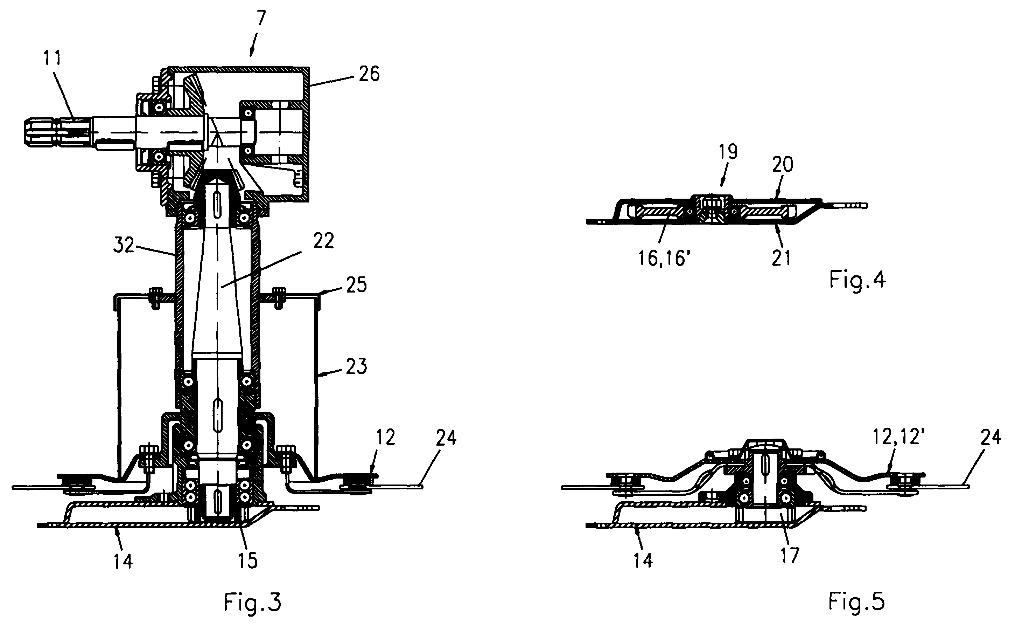

**Fig. 3** zeigt den Schnitt A-A gemäß Fig. 2 und damit die Fortsetzung und Durchführung des Antriebsstrangs (8) durch das Winkelgetriebe (7) und durch die Fördertrommel (23) mit ihrer Mähscheibe (12) bis hinein in das Getriebegehäuse (14).

In dieser Schnittdarstellung ist die Eingangswelle (11) des Winkelgetriebes (7) zum besseren Verständnis des weiteren Verlaufs des fortgesetzten Antriebsstrangs (8) in die Zeichenebene hineingelegt. Das Kegelradgetriebe (7) beinhaltet die Eingangswelle (11) mit ihren Stützlagern und den Kegelrädersatz. Die Fortsetzung des Antriebsstrangs (8) bildet die in dem Lagerhals (27) gelagerte und abgestützte Antriebswelle (22). Der Lagerhals (27) ist mit dem Gehäuse (26) fest verbunden.

Mit der Antriebswelle (22) drehfest verbunden sind die Fördertrommel (23) und die Mähscheibe (12). Die Fördertrommel (23) ist in ihrer Öffnung nach oben durch eine feststehende mit dem Lagerhals (27) verbundene Abdeckung (25) gegen eindringende Fremdstoffe verschlossen.

**Fig. 4** zeigt den Schnitt C-C gemäß Fig. 2 durch das Antriebsgehäuse (14) mit einem Stirnrad (16 bzw. 16') und dem dazugehörigen Stützlager (19), welches sich in der oberen Gehäusewand (20) und unteren Gehäusewand (21) des Antriebsgehäuses (14) des Mähaggregats (4) abstützt.

**Fig. 5** zeigt den Schnitt B-B gemäß Fig. 2 durch das Antriebsgehäuse (14) und durch die Lagerung einer Mähscheibe (12 bzw. 12') mit den Mähklingen (24).

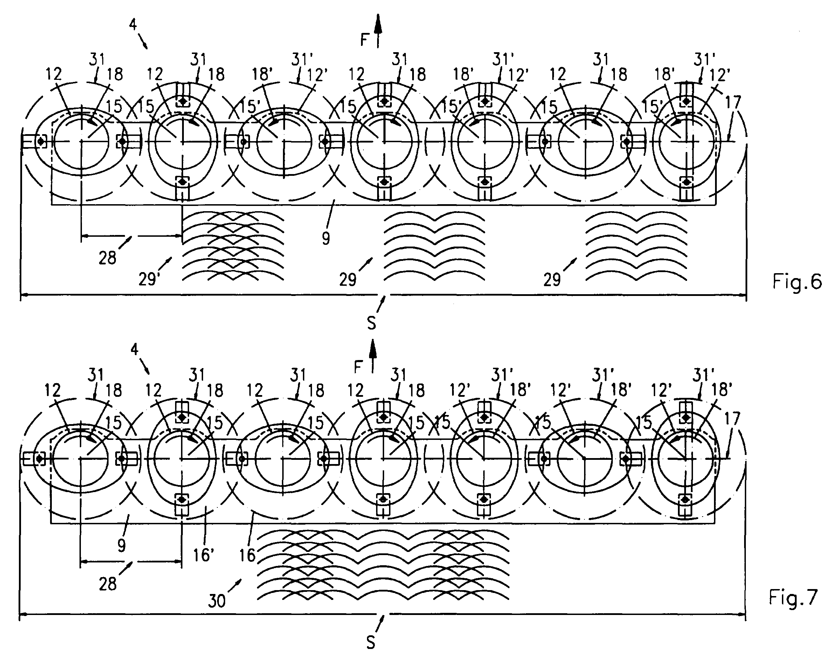

**Fig. 6** zeigt ein freies Mähaggregat (4) mit der Schnittbreite (S) in der Draufsicht an einem Beispiel mit sieben Mähscheiben (12,12'), wobei die zugeordneten Drehrichtungen (18,18') der Mähscheiben (12,12'), durch Drehrichtungspfeile gekennzeichnet sind.

Diese Zuordnung der Mähscheiben (12,12') ergibt keine vollständige Paarung, da die Anzahl der Mähscheiben nicht ganzzahlig durch Zwei teilbar ist, wobei dieses jedoch keine notwendige Voraussetzung für die Realisierung der Erfindung darstellt.

Die Messerspitzen der Mähklingen (24) beschreiben im Betriebszustand des Mähaggregats (4) die Flugkreise (31,31'). Alle Mähscheiben (12,12') besitzen den gleichen Achsabstand (28) zu ihren benachbarten Mähscheiben (12,12'). Alle Drehachsen der Mähscheiben (12,12') liegen auf der Verbindungsgraden (17).

Bedingt durch die dargestellte Zuordnung der Drehrichtungen (18,18') der Mähscheiben (12,12') erzeugt das Mähaggregat drei Einzelmahden (29',29,29). Durch das Zusammenwirken der äußeren in Fahrtrichtung (F) gesehen linksendseitigen gleichläufig drehenden Mähscheiben (12,12) in Verbindung mit einer dritten Mähscheibe (12') beinhaltet die Mahd (29') eine größere Grünfuttermenge, als die beiden übrigen Mahden (29,29), welche durch das Zusammenwirken von je zwei gegenläufig drehenden Mähscheiben (12,12') parallel zur Mahd (29') abgelegt werden.

**Fig. 7** zeigt ein freies Mähaggregat (4) anlog Fig. 6, jedoch in einer anderen Zuordnung der Drehrichtungen (18,18') gegenüber Fig. 6.

Beidseitig der mittleren Mähscheibe (12) befinden sich jeweils drei gleichläufig drehende Mähscheiben (12,12,12) bzw. (12',12',12'). Diese Art der Zuordnung der Drehrichtungen (18,18') erzeugt, bedingt durch das Zusammenwirken mehrerer gleichläufig drehender Mähscheiben (12,12,12,12) und (12',12',12'), nur eine gegenüber der Schnittbreite (S) reduzierte Breite einer Mahd (30).

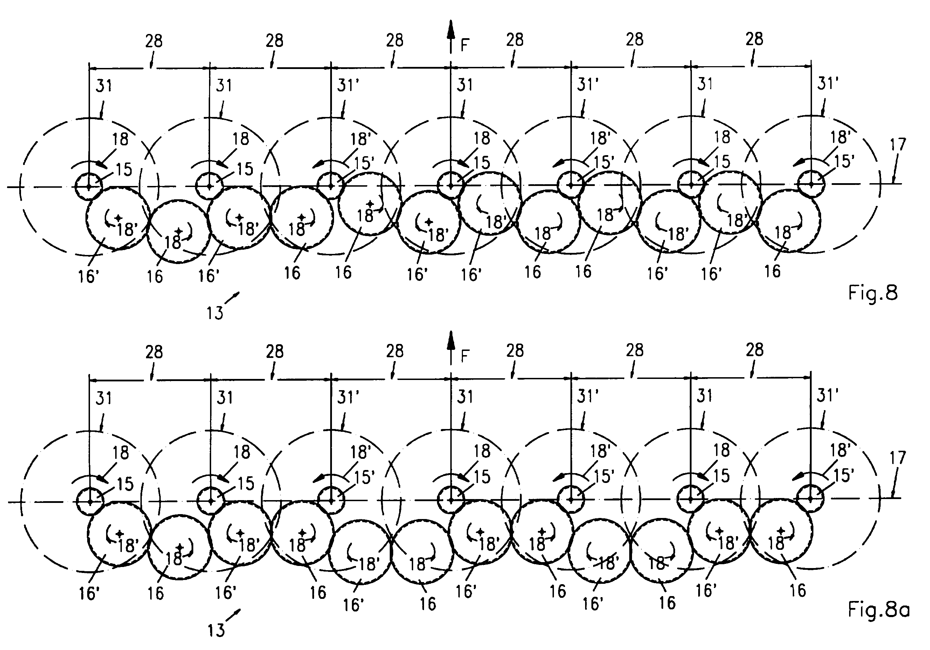

In **Fig. 8** ist ein Ausführungsbeispiel einer offengelegten Antriebskette (13) eines Antriebsgetriebes eines Mähaggregats (4) gemäß Fig. 6 dargestellt. Diese Antriebskette (13) besteht aus einer Kombination von Stirnräder (16,16') und Stirnradritzeln (15,15'), welche mittels ihrer Verzahnung wechselseitig miteinander in Eingriff stehen.

Eines der Stirnradritzel (15), beispielsweise das vorletzte der linksendseitig angeordneten Stirnradritzel (15), leitet das Antriebsdrehmoment ausgehend von der Antriebswelle (22) in die Antriebskette (13) ein.

Die äußeren Stirnradritzel (15 bzw. 15') stellen die Endglieder der Antriebskette (13) dar. Die beidendseitig jeweils vorletzten Stirnradritzel (15 bzw. 15') befinden sich außerhalb der Antriebskette (13), da sie jeweils nur mit einem Stirnrad (16 bzw. 16') in Eingriff stehen, während die drei mittleren Stirnradritzel (15',15,15') sich jeweils mit zwei Stirnrädern (16,16);(16',16');(16,16) in Eingriff und damit innerhalb der Antriebskette (13) befinden. Alle Achsabstände (28) sind untereinander gleich.

In **Fig. 8a** ist ein alternatives Ausführungsbeispiel zu der in Fig. 8 dargestellten Antriebskette (13) eines Antriebsgetriebes eines Mähaggregats (4) gemäß Fig. 6. Diese Antriebskette (13) besteht aus einer Kombination von Stirnrädern (16,16') und Stirnradritzeln (15,15') derart, daß alle Stirnradritzeln (15,15') zwischen den außenliegenden Stirnradritzeln (15,15') außerhalb der Antriebskette (13) liegen. Alle Achsabstände (28) sind untereinander gleich.

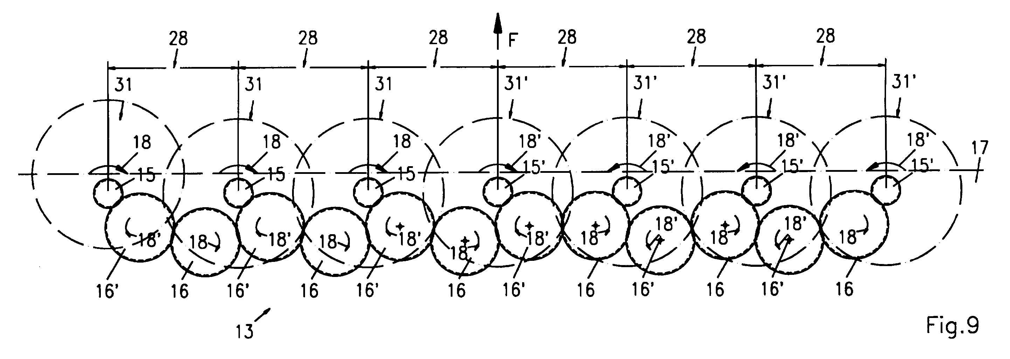

In **Fig. 9** ist anlog zur Fig. 8 ein Ausführungsbeispiel für eine Antriebskette (13) des Stirnradgetriebes (9) des Mähaggregats (4) gemäß Fig. 8 im offenlegten Zustand dargestellt. Die Antriebskette (13) besteht aus den äußeren Stirnradritzel (15 bzw. 15'), welche die Endglieder der Antriebskette (13) darstellen und den Stirnrädern (16,16'), welche mittels ihrer Verzahnung wechselseitig miteinander in Eingriff stehen.

Die verbleibenden Stirnradritzel (15,15') befinden sich außerhalb der Antriebskette (13), da diese Stirnradritzel (15) jeweils mit nur einem Stirnrad (16 oder 16') in Eingriff stehen. Alle Achsabstände (28) sind untereinander gleich.

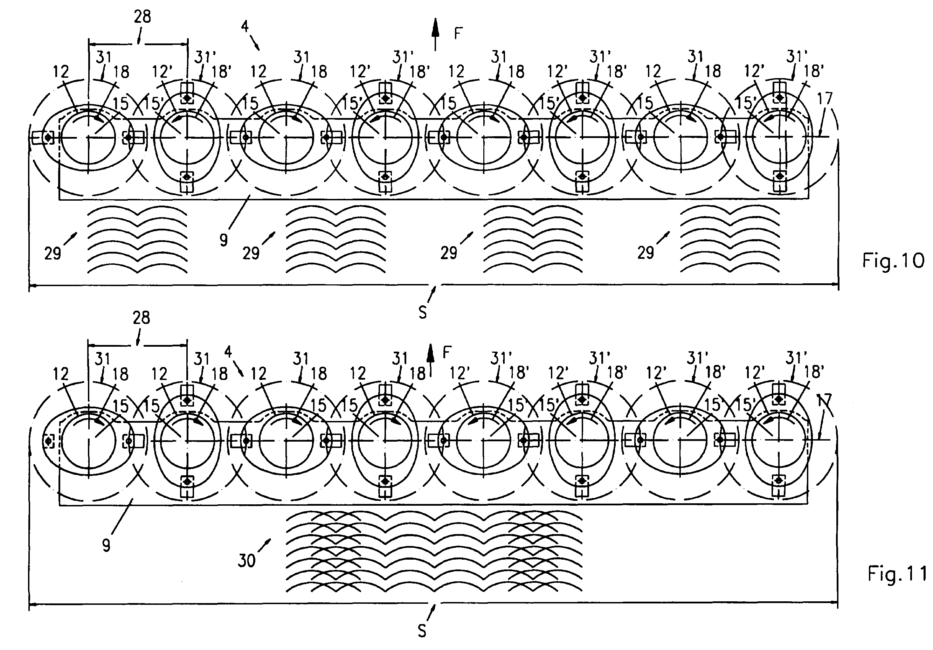

**Fig. 10** zeigt ein freies Mähaggregat (4) mit der Schnittbreite (S) in der Draufsicht an einem Beispiel mit acht Mähscheiben (12,12'), wobei die zugeordneten Drehrichtungen (18,18') der Mähscheiben (12,12'), durch Drehrichtungspfeile gekennzeichnet sind.

Diese Zuordnung der Mähscheiben (12,12') ergibt eine vollständige Paarung, da die Anzahl der Mähscheiben ganzzahlig durch Zwei teilbar ist, welches jedoch keine notwendige Voraussetzung für die Realisierung der Erfindung darstellt.

Die Messerspitzen der Mähklingen (24) beschreiben im Betriebszustand des Mähaggregats (4) Flugkreise (31,31'). Alle Mähscheiben (12,12') besitzen den gleichen Achsabstand (28) zu ihren benachbarten Mähscheiben (12,12'). Alle Drehachsen der Mähscheiben (12,12') liegen auf der Verbindungsgraden (17). Bedingt durch die dargestellte Zuordnung der Drehrichtungen (18,18') der Mähscheiben (12,12') erzeugt das Mähaggregat vier Mahden (29).

**Fig. 11** zeigt ein freies Mähaggregat (4) anlog zu Fig. 10, jedoch in einer anderen Zuordnung der Drehrichtungen (18,18') gegenüber Fig. 10.

Symmetrisch zur Schnittbreite (S) befinden sich jeweils vier gleichläufig drehende Mähscheiben (12,12,12,12) bzw. (12',12',12',12'). Diese Art der Zuordnung der Drehrichtungen (18,18') erzeugt, bedingt durch das Zusammenwirken mehrerer gleichläufig drehender Mähscheiben (12,12,12,12) und (12',12',12'), eine gegenüber der Schnittbreite (S) reduzierte Breite einer Mahd (30).

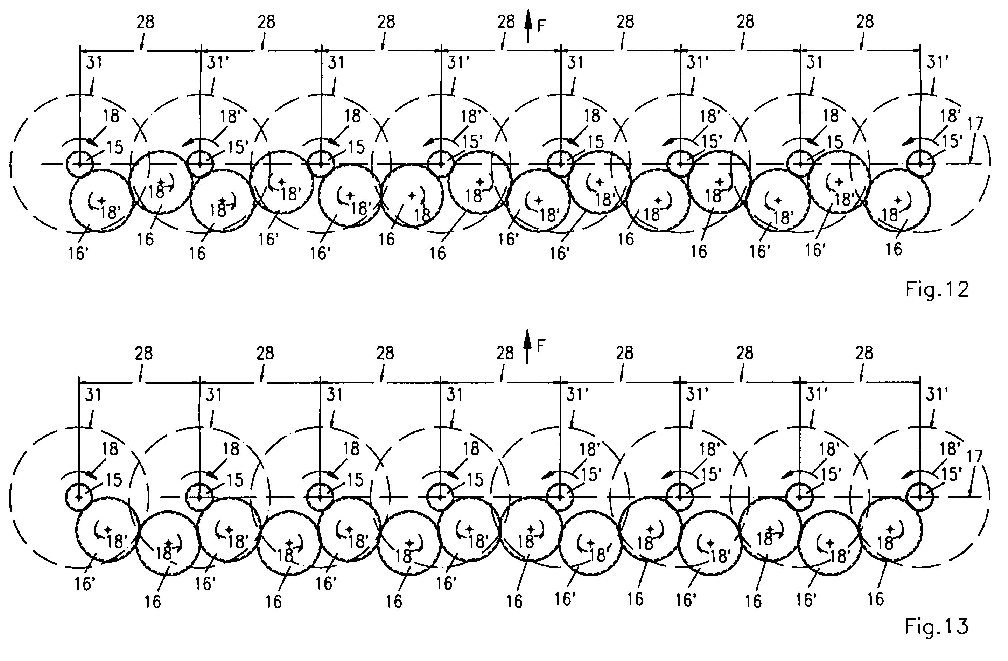

In **Fig. 12** ist ein Ausführungsbeispiel einer offengelegten Antriebskette (13) eines Antriebsgetriebes eines Mähaggregats (4) gemäß Fig. 10 dargestellt. Diese Antriebskette (13) besteht aus einer Kombination von Stirnräder (16,16') und Stirnradritzeln (15,15'), welche mittels ihrer Verzahnung wechselseitig miteinander in Eingriff stehen.

Eines der Stirnradritzel (15), beispielsweise das vorletzte der linksendseitig angeordneten Stirnradritzel (15), leitet das Antriebsdrehmoment ausgehend von der Antriebswelle (22) in die Antriebskette (13) ein.

Die äußeren Stirnradritzel (15 bzw. 15') stellen die Endglieder der Antriebskette (13) dar. Alle übrigen Stirnradritzel (15 bzw. 15') befinden sich innerhalb der Antriebskette (13), da sie jeweils mit zwei Stirnrädern (16,16) oder (16',16') in Eingriff stehen. Dadurch bilden alle Stirnradritzel (15,15') mit allen Stirnrädern (16,16') eine gemeinsame Antriebskette (13). Alle Achsabstände (28) sind untereinander gleich.

In **Fig. 13** ist anlog zur Fig. 11 ein Ausführungsbeispiel für eine Antriebskette (13) des Stirnradgetriebes (9) des Mähaggregats (4) gemäß Fig. 11 im offenlegten Zustand dargestellt. Die Antriebskette (13) besteht aus den äußeren Stirnradritzel (15 bzw. 15'), welche die Endglieder der Antriebskette (13) darstellen und den Stirnrädern (16,16'), welche mittels ihrer Verzahnung wechselseitig miteinander in Eingriff stehen.

Die verbleibenden Stirnradritzel (15,15') befinden sich außerhalb der Antriebskette (13), da diese Stirnradritzel (15) jeweils mit nur einem Stirnrad (16 oder 16') in Eingriff stehen. Alle Achsabstände (28) sind untereinander gleich.

Durch diese Art der Zuordnung von Stirnrädern (16,16') und Antriebsritzeln (15,15') lassen sich beliebige Kombinationen von Drehrichtungszuordnungen (18,18') erzeugen. Dabei bleiben die Achsabstände (28) der Mähscheiben (12,12'). bei gleichbleibenden Teilkreisdurchmessern der Stirnräder (16,16') und Stirnradritzel (15,15) unverändert.

Bedingt durch die erfindungsgemäße Ausführung von Stirnradgetrieben (9) zum Antrieb der Mähscheiben (12,12') eines Mähaggregates (4) von Scheibenmähern ermöglicht diese ein Höchstmaß an Gleichteilen, was Stirnrädern (16,16') und Stirnradritzel (15,15) betrifft. Die konstruktive Ausbildung von Antriebsketten (13) nach den Merkmalen der Erfindung ermöglicht eine besonders kostengünstige Bauweise von Scheibenmähern. Diese Merkmale sind anwendbar bezüglich der Ausgestaltung der Antriebskette (13) unabhängig von der Schnittbreite (S) und unabhängig von der Ausgestaltung der Mahdformung in Verbindung mit der Mahdablage verschiedener Scheibenmäher.

### Bezugszeichenliste

- 1 -: Tragwerk
- 2 -: Ausleger
- 3,3' -: Horizontalachse
- 4 -: Mähaggregat
- 5 -: Querträger
- 6 -: Winkelgetriebe
- 7 -: Winkelgetriebe
- 8 -: Antriebsstrang
- 9 -: Stirnradgetriebe
- 10 -: Ausgangswelle
- 11 -: Eingangswelle
- 12,12' -: Mähscheibe
- 13 -: Antriebskette
- 14 -: Getriebegehäuse
- 15 -: Stirnradritzel
- 16,16' -: Stirnrad
- 17 -: Verbindungsgerade
- 18 -: Drehrichtung rechts
- 18' -: Drehrichtung links
- 19 -: Stützlager
- 20 -: obere Gehäusewand
- 21 -: untere Gehäusewand
- 22 -: Antriebswelle
- 23 -: Fördertrommel
- 24 -: Mähklinge
- 25 -: Abdeckung
- 26 -: Gehäuse
- 32 -: Lagehals
- 28 -: Achsabstand
- 29 -: Mahd
- 30 -: Mahd
- 31 -: Flugkreis
- 32 -: Schutzabdeckung (Kontur)
- F -: Fahrtrichtung
- S -: Schnittbreite

## Patentansprüche

1. Kreiselmäher, insbesondere Scheibenmäher, zum Anbau an Heck- oder Frontdreipunktgestänge von Traktoren, mit mehreren um vertikale Achsen drehbaren und von der Zapfwelle eines Traktors antreibbaren Mähscheiben (12), die zusammenwirkend ein Mähaggregat (4) bilden, wobei die Mähscheiben (12,12') in einem Getriebegehäuse (14) unterhalb der Mähscheiben (12,12') gelagert sind, und das Stirnradgetriebe (9) als Fortsetzung des Antriebsstrangs (8) ausgehend von einer Zapfwelle eine Antriebskette (13) umfaßt, und die Antriebskette (13) Stirnräder (16,16') aufweist, die mit Stirnradritzeln (15) von Mähscheiben (12,12') in Eingriff stehen, **dadurch gekennzeichnet**, daß zwei benachbarten Mähscheiben (12,12');(12,12);(12',12') jeweils innerhalb der Antriebskette zur Überbrückung der Achsabstände zwei Stirnräder (16,16') zugeordnet werden können, und daß bei jedem Paar benachbarter Mähscheiben die Summe der Teilkreisdurchmesser beider Stirnräder (16,16');(16,16);(16',16') größer ist, als der Achsabstand (28) zwischen diesen beiden Mähscheiben.

2. Scheibenmäher nach Anspruch 1 **dadurch gekennzeichnet**, daß die benachbarten Stirnräder (16,16');(16,16);(16',16') gleiche Teilkreisdurchmesser ausweisen.

3. Scheibenmäher nach Anspruch 1 **dadurch gekennzeichnet**, daß alle Stirnräder (16,16') der Antriebskette (13) den gleichen Teilkreisdurchmesser ausweisen.

4. Scheibenmäher nach Anspruch 1 in Verbindung mit mindestens einem der Ansprüche 2 oder 3 **dadurch gekennzeichnet**, daß alle Achsabstände (28) zweier benachbarter Mähscheiben (12,12');(12,12);(12',12') eines Mähaggregats (4) untereinander gleich sind.

5. Scheibenmäher nach Anspruch 1 in Verbindung mit einem oder mehreren der Ansprüche 2 bis 4, **dadurch gekennzeichnet**, daß die Verbindungsgerade (17) der Rotationsachsen aller Mähscheiben (12,12') eines Mähaggregats (4) eine Gerade darstellt.

6. Scheibenmäher nach Anspruch 1 in Verbindung mit einem oder mehreren der Ansprüche 2 bis 5, **dadurch gekennzeichnet**, daß mindestens ein Stirnradritzel (15,15') außerhalb der Antriebskette (13) mit jeweils einem Stirnrad (16 oder 16') in Eingriff steht.

7. Scheibenmäher nach Anspruch 1 in Verbindung mit einem oder mehreren der Ansprüche 2 bis 5, **dadurch gekennzeichnet**, daß mindestens ein Stirnradritzel (15 oder 15') innerhalb der Antriebskette (13) mit zwei benachbarten Stirnrädern (16,16');(16,16);(16',16');(16',16) in Eingriff steht.

8. Scheibenmäher nach Anspruch 1 in Verbindung mit einem oder mehreren der Ansprüche 2 bis 7, **dadurch gekennzeichnet**, daß die Verbindungslinie der Rotationsachsen von mindestens drei benachbarten Stirnräder (16,16',16); (16',16,16'); (16,16,16'); (16',16',16) keine Gerade darstellt.
